# FASCICULE DE BREVET EUROPEEN

(11) **EP 3 710 311 B1**
(45) Date de publication et mention de la délivrance du brevet: **27.04.2022**
(21) Numéro de dépôt: 18789423.3
(22) Date de dépôt: 23.10.2018
(51) Int. Cl.: B60R 5/00, B60R 7/08, B60R 7/04

(54) **ENSEMBLE INTERIEUR SUPPORT DE CHARGES, SE DISPOSANT EN PARTIE INTERIEURE HAUTE DU VEHICULE**
INNENRAUMANORNDUNG ZUM TRAGEN VON LASTEN IM OBEREN FAHRZEUGINNENRAUMTEIL
INTERIOR ASSEMBLY FOR SUPPORTING LOADS THAT IS ARRANGED IN THE UPPER INTERIOR PART OF THE VEHICLE

(30) Priorité: 16.11.2017 FR 1760799
(43) Date de publication de la demande: 23.09.2020
(73) Titulaire: Renault s.a.s, 92100 Boulogne Billancourt (FR)
(72) Inventeur: DA CRUZ, Frederic, 78950 Gambais (FR)
(74) Mandataire: Renault Group
(86) Numéro de dépôt international: PCT/EP2018/079065
(87) Numéro de publication internationale: WO 2019/096550

(56) Documents cités:
- EP-A1- 1 681 204
- DE-A1-102007 037 212
- FR-A1- 2 682 657
- FR-A1- 2 927 031
- US-A- 3 534 892

## Description

La présente invention se rapporte à un ensemble intérieur support de charges, se disposant en partie intérieure haute d'un véhicule.

Il existe un besoin de pouvoir installer des charges, et notamment des charges longues, à l'intérieur d'un véhicule particulier ou utilitaire pour pouvoir les transporter, voire les stocker, tout en ayant les portes fermées.

Il a été proposé d'utiliser l'espace intérieur de la zone pavillonnaire du véhicule, soit sous le toit, en y installant une galerie intérieure pour y charger des objets.

Ainsi dans la demande de brevet FR2927031, il est décrit un dispositif de chargement réalisé avec au moins une barre transversale support d'un objet. Ladite barre est solidarisée aux parois latérales de caisse du véhicule par solidarisation en chacune de ses extrémités à un pied de fixation en L comprenant une ouverture et se fixant à la paroi de véhicule réceptrice à l'aide d'un élément de fixation mâle en l'extrémité duquel se visse une molette de serrage pour verrouiller la position du pied et par conséquent la position de la barre. La barre peut être mise en position de non utilisation par pivotement à 180 degrés vers le toit du véhicule en desserrant la molette, la barre est pivotée manuellement en faisant pivoter le pied support, puis la molette est resserrée pour verrouiller la position. Le dispositif peut comporter deux barres, par exemple l'une au-dessus de la tête du conducteur et l'autre à l'arrière, au-dessus de la nuque des passagers arrière.

Il peut cependant être fastidieux d'avoir à pivoter chaque barre support de charge. De plus l'aménagement de l'espace pavillonnaire intérieur du véhicule peut être mieux optimisé.

Le document US 3 534 892 A décrit un ensemble de support de charge conforme au préambule de la revendication 1.

L'invention vise notamment à résoudre les inconvénients évoqués ci-dessus en proposant un nouvel ensemble intérieur support de charges d'un véhicule.

A cet effet, l'invention propose un ensemble intérieur support de charges d'un véhicule comportant les caractéristiques de la revendication 1.

Lesdites galeries forment ainsi une structure escamotable dans le véhicule en ne manœuvrant qu'une seule galerie, leurs déplacements par pivotement d'une position d'usage à une position de non-usage étant synchronisés.

De préférence ladite première galerie comprend un dispositif de verrouillage de ses positions d'usage et de non usage. Avantageusement seule ladite première galerie comprend un dispositif de verrouillage, car il est inutile que ladite deuxième galerie soit équipée d'un dispositif de verrouillage qui lui est propre, ses positions d'usage et de non usage étant bloquées par le dispositif de verrouillage de la première galerie, du fait du couplage entre elles. En d'autres termes la première galerie forme la galerie maîtresse et la deuxième galerie forme une galerie asservie.

Conformément à l'invention, les moyens de couplage entre lesdites galeries comprennent une première tringle et une deuxième tringle articulées entre elles en l'une de leur extrémité respective, ladite première tringle étant articulée en son autre extrémité avec ladite première galerie et ladite deuxième tringle étant articulée en son autre extrémité avec ladite deuxième galerie.

Avantageusement selon l'invention, la première tringle est d'une longueur supérieure à la deuxième tringle.

Selon un mode de réalisation particulier de l'invention, au moins l'un des dispositifs de solidarisation de la première galerie à l'intérieur du véhicule intègre lesdits moyens de verrouillage des positions d'usage et de non-usage.

Selon un mode de réalisation particulier de l'invention, ladite galerie comprend une barre transversale prolongée en chacune de ses extrémités d'un bras latéral équipé d'un bouton poussoir, et lesdits moyens de solidarisation comprennent un dispositif de guidage et de verrouillage en forme de secteur présentant une rainure de guidage de la tête du poussoir, ladite rainure étant en forme d'un arc de cercle qui présente en chaque extrémité un logement en creux récepteur de la tête du poussoir et correspondant respectivement à la position d'usage et de non-usage de la galerie.

De préférence selon l'invention, lesdites galeries sont montées pivotables pour être déplacées par pivotement, réversiblement, d'une position d'usage à une position de non-usage suivant un déplacement angulaire de 90 degrés.

Avantageusement selon l'invention, ledit ensemble comprend un élément de rangement en prolongement des galeries, se présentant sous forme d'une boîte comportant une paroi inférieure sensiblement horizontale et se prolonge en une paroi supérieure qui épouse sensiblement la forme intérieure du pavillon du véhicule.

L'invention concerne aussi un véhicule automobile, en particulier un véhicule utilitaire équipé d'un ensemble intérieur support de charges. Plus spécifiquement, l'invention concerne un véhicule utilitaire comprenant dans sa partie intérieure haute, un ensemble intérieur support de charges tel que défini précédemment, les galeries étant installées en partie utilitaire du véhicule, à proximité des pieds et traverses de pieds du véhicule. Lesdites galeries s'escamotent en position de non-usage dans l'espace occupé par les traverses de pieds.

De préférence selon l'invention, la première galerie, soit la galerie maîtresse, est la galerie située le plus à l'arrière du véhicule.

De préférence selon l'invention, l'élément de rangement dudit ensemble est aménagé en prolongement des galeries dans la partie haute de l'habitacle.

Avantageusement selon l'invention, ledit élément de rangement est fixé entre deux traverses de pieds du véhicule.

D'autres particularités et avantages de l'invention ressortiront à la lecture de la description faite ci-après d'un mode de réalisation particulier de l'invention, à titre indicatif mais non limitatif, en référence aux dessins annexés pour lesquels :
- la figure 1 illustre schématiquement; un ensemble intérieur support de charges selon l'invention, installé dans un véhicule automobile utilitaire, suivant une vue en coupe longitudinale ;
- la figure 2A illustre schématiquement deux galeries supports de charges synchronisées, qui sont des éléments supports de charges dudit ensemble, en position basse suivant une vue de côté des galeries ;
- la figure 2B illustre schématiquement les deux galeries synchronisées de la figure 2A, dans une position intermédiaire entre la position basse et la position haute, suivant une vue en volume de trois-quarts de côté et de dessous;
- la figure 2C illustre schématiquement les deux galeries synchronisées de la figure 2A ou 2B, en position haute, suivant une vue de côté ;
- la figure 3 illustre schématiquement un mode de réalisation d'une des galeries des figures 2A à 2C, munie d'un support de solidarisation à la caisse du véhicule, suivant une vue de face avant, soit suivant une vue transversale du véhicule;
- la figure 4 illustre schématiquement un mode de réalisation d'une galerie des galeries représentées aux figures 2A à 2C, munie d'un support de solidarisation et de verrouillage à la caisse du véhicule, suivant une vue en perspective de l'intérieur vers un côté ;
- la figure 5 illustre schématiquement; un mode de réalisation d'un élément avant d'un ensemble intérieur support de charges tel que celui de la figure 1, suivant une vue en coupe longitudinale du véhicule.

Dans la suite de la description, il est fait référence à un repère XYZ, dans lequel X est la direction longitudinale avant-arrière du véhicule, orientée vers l'arrière, Y est la direction transversale orientée vers la droite du véhicule, et Z est la direction verticale orientée vers le haut du véhicule.

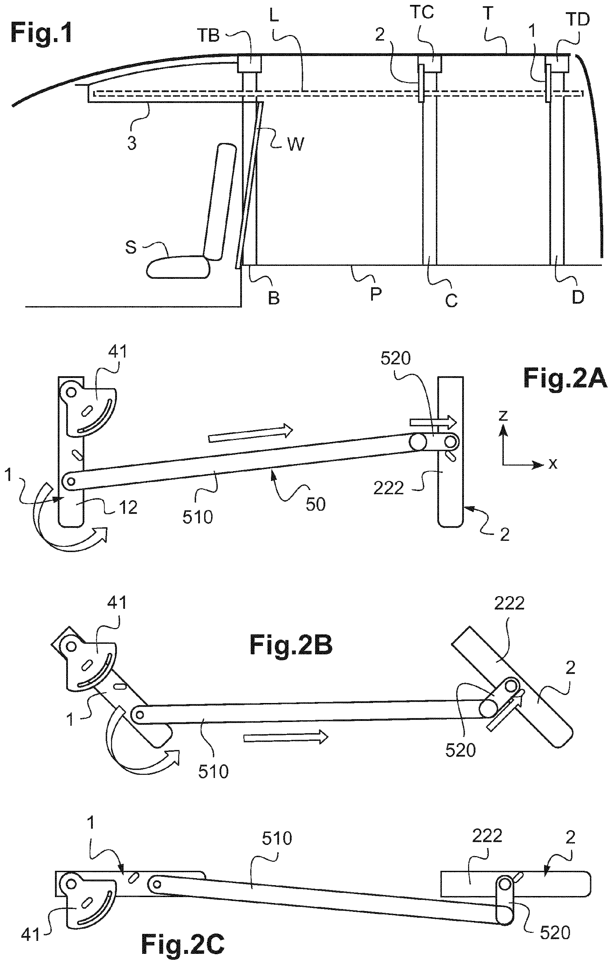

La figure 1 illustre schématiquement un ensemble intérieur d'éléments supports de charges selon l'invention, installé en partie haute, soit sous le toit T (ou pavillon) d'un véhicule automobile utilitaire. Une charge L supportée par ledit ensemble est représentée sous forme d'un objet long.

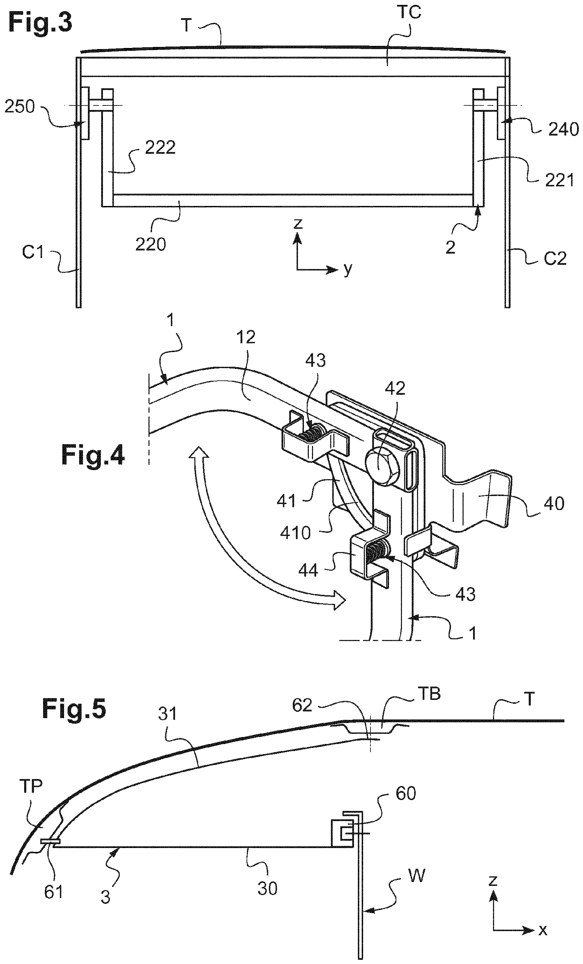

Cet ensemble comprend une première galerie 1 correspondant à la galerie arrière et une deuxième galerie 2 correspondant à la galerie avant. Chaque galerie est disposée de préférence à proximité des traverses supérieures des pieds du véhicule, cette zone étant une zone renforcée. Le schéma ne montre pas ici les moyens de couplage entre les galeries, les galeries et leur couplage étant illustrés plus en détails aux figures 2A à 2C et aux figures 3 et 4 commentées plus bas.

Sur cette figure 1 sont représentés trois pieds B, C, D, du véhicule (le premier pied plus en avant n'étant pas visible sur cette figure) et une cloison W séparant l'habitacle de la partie utilitaire du véhicule. Ces pieds qui ont pour fonction de consolider la structure du véhicule en liant la partie du bas de caisse, soit sensiblement au niveau du plancher P, à la partie du pavillon T du véhicule, s'élèvent à la verticale sous forme de « I » et comportent des prolongements en leurs extrémités sous forme de traverses en bas de caisse, et aussi sous forme de traverses TB, TC, TD en bas de pavillon.

Cet ensemble comprend en outre un coffre de rangement 3 situé à l'avant du véhicule, en hauteur dans l'habitacle, au-dessus du siège S du passager selon ce cas particulier, et à l'avant d'une cloison de séparation W disposée entre l'habitacle et la partie utilitaire. Un exemple d'un tel coffre de rangement est décrit plus en détails à l'appui de la figure 5. Ce coffre peut être optionnel selon l'invention, mais de préférence il est intégré à l'ensemble selon l'invention.

Les figures 2A à 2C illustrent schématiquement le couplage des galeries arrière 1 et avant 2 lors du passage des galeries en position basse d'usage à une position haute de non usage, selon un déplacement angulaire de 90 degrés. La figure 2A illustre schématiquement les deux galeries en position basse suivant une vue de côté, la figure 2B illustre schématiquement les deux galeries dans une position intermédiaire entre la position basse et la position haute, suivant une vue en volume de trois-quarts de côté et de dessous, et enfin la figure 2C illustre schématiquement les deux galeries en position haute, suivant une vue de côté.

La galerie arrière 1 est la galerie maitresse du couplage des galeries et la galerie avant 2 est la galerie asservie à ladite galerie maîtresse. Un exemple de réalisation de galerie avant 2 est illustré en figure 3 et un exemple de galerie arrière 1 est illustrée (partiellement) en figure 4.

La figure 3 illustre un exemple de galerie avant 2 montée entre les parois latérales C1, C2, de la structure de caisse, en haut du véhicule, à proximité de la traverse de pied TC. Ladite galerie se compose d'une barre transversale 220 adaptée à la largeur du véhicule, prolongée solidairement en l'une de ses extrémités d'une première barre latérale verticale 221 et en son extrémité opposée d'une deuxième barre latérale verticale 222. Une telle galerie peut être par exemple un tube métallique coudé en forme de U. En position d'usage ladite barre transversale 220 reçoit les charges, et les barres verticales permettent de retenir les charges latéralement tout en formant les bras supports de la barre transversale et récepteurs des moyens de solidarisation au véhicule. Chaque barre verticale 221, 222 est munie en son extrémité supérieure d'un support 240 , 250 de solidarisation à la paroi de caisse qui est muni d'un axe pivot transversal permettant le pivotement de ladite galerie autour dudit axe pivot, réversiblement, pour la passer d'une position basse, correspondant à la position d'usage, vers une position relevée, suivant un déplacement angulaire d'environ 90 degrés depuis la position basse, et correspondant à la position de non-usage. Chaque support de solidarisation s'interface entre la galerie et une paroi de caisse.

Cette galerie avant 2 n'étant pas de préférence verrouillable dans ses positions d'usage et de non-usage, les supports peuvent être des supports simples. Au cas où un verrouillage/déverrouillage serait envisagé, le support pourrait par exemple être un support monté articulé sur la paroi de caisse avec des moyens de blocage de positions.

Suivant la figure 4 illustrant la galerie arrière 1, selon une vue partielle, la galerie comprend un dispositif de solidarisation à une paroi latérale du véhicule, rendant la galerie pivotable et intégrant un mécanisme de verrouillage/déverrouillage des positions d'usage et non-usage de la galerie. La galerie 1 est formée d'un tube coudé comprenant une partie rectiligne transversale, formant la barre transversale réceptrice des charges et prolongée en chaque extrémité, au niveau de la courbure du tube, par des bras verticaux 12 qui sont solidarisés en leur extrémité respective aux parois latérales de la caisse du véhicule. La galerie est illustrée, partiellement, en position basse et en position relevée à 90 degrés. Les moyens de solidarisation comprennent une patte de montage 40 présentant un orifice traversant et à laquelle est adjointe un dispositif de guidage et de verrouillage 41 en forme de secteur. Ledit dispositif 41 comprend un trou d'axe qui vient en correspondance avec l'orifice de la patte et au travers desquels passe un boulon 42 (ou vis), et ledit boulon ayant été auparavant inséré dans un orifice percé dans le bras tubulaire 12 de la galerie. Ledit dispositif de guidage et de verrouillage 41 en forme de secteur présente en outre une rainure de guidage 410, en forme d'arc de cercle, qui guide la tête d'un poussoir à ressort 43 fixé à travers le bras tubulaire de la galerie, le ressort étant du côté opposé à la forme en secteur et disposé en appui contre une plaque 44 fixée sur ledit bras. La tête du poussoir est située en extrémité opposée à celle entourée du ressort, et est du côté de ladite rainure de guidage 410. Ladite rainure comporte en chaque extrémité un logement en creux dans lequel vient se loger la tête du poussoir, les logements correspondant respectivement à la position basse et à la position relevée de la galerie. Les logements sont ainsi positionnés en bout de course des déplacements angulaires de la galerie selon les directions longitudinales X+ ou X-. Lorsque la galerie est pivotée à 90 degrés en exerçant une force de poussée sur la barre transversale manuellement par exemple, le ressort du poussoir se comprime sous cette poussée de sorte que la tête du poussoir sort de son logement en bout de rainure de guidage du secteur pour être ensuite guidée suivant l'arc de ladite rainure jusqu'à atteindre l'autre logement, le ressort se détend et la tête est alors maintenue par la force du ressort détendu dans ledit autre logement. Les deux positions basse et relevée de la galerie peuvent ainsi être verrouillées.

Concernant le couplage des galeries avant 2 et arrière 1, les galeries sont montées selon les représentations illustrées respectivement aux figures 3 et 4. Les galeries sont solidarisées entre elles par un dispositif de couplage articulé 50 afin de rendre leurs déplacements en rotation synchrones et ainsi les mettre simultanément en position de non-usage, les figures 2A à 2C montrant la progression du déplacement. Selon l'exemple illustré, la galerie arrière 1, qui est la galerie maîtresse, est montée en l'extrémité d'au moins l'un de ses bras 12 sur un dispositif de solidarisation à la paroi de caisse intégrant un dispositif de guidage et de verrouillage tel que le dispositif en forme de secteur 41 coopérant avec le bouton poussoir 43 sur le bras de la galerie. En outre ladite galerie est reliée en ledit bras 12 à un dispositif de couplage articulé 50. Ledit dispositif de couplage 50 comprend une première tige 510 et une seconde tige 520 qui sont reliées en l'une de leurs extrémités l'une à l'autre de manière articulée sur un axe de rotation transversal, l'autre extrémité de la première tige 510 étant reliée par articulation sur un axe de rotation à un bras 12 de la galerie arrière 1, et l'extrémité de la seconde tige étant reliée à un bras 222 de la galerie avant 2, du même côté que le bras relié de la galerie maîtresse 1, en un point un plus haut que celui de liaison entre la première tige et la galerie arrière. La première tige 510 reliée à la galerie arrière et maîtresse 1 est plus longue que la seconde tige 520 reliée à la galerie avant 2. Lorsqu'une force est appliquée pour pousser la galerie arrière vers l'avant, en direction de la galerie avant, la galerie pivote par guidage dans la rainure de guidage 410 de son dispositif de guidage et de verrouillage 41 vers sa position relevée, à 90 degrés de sa position basse d'usage. La première tige 510 du dispositif de couplage transmet le mouvement de rotation imprimé sur la galerie arrière 1 en fait basculer la seconde tige du dispositif de couplage qui va alors pousser la galerie avant 2, cette dernière pivotant à son tour suivant son dispositif de montage sur la paroi de caisse. Les deux galeries se trouvent ainsi en position relevée, à l'horizontal, en même temps, selon un mouvement synchronisé, l'opérateur n'ayant qu'à agir sur l'une des galeries, selon l'exemple sur la galerie arrière 1. Pour remettre les galeries en position d'usage, dans le plan vertical, il suffit de tirer sur la galerie maîtresse 1 vers l'arrière, la force ainsi exercée déverrouille la position de la galerie 1 et le dispositif de couplage 50 entraîne alors la galerie avant 2 pour la faire pivoter du plan horizontal vers le plan vertical.

Un avantage de l'invention est que les galeries peuvent être repliées dans le véhicule sans avoir à les démonter ni stocker, et que leur mise en position de non-usage se fait en une seule manœuvre, et de même pour leur mise en position d'usage. Le dispositif est facile à mettre en œuvre par un utilisateur grâce au système de verrouillage intégré aux supports de solidarisation.

Un autre avantage de l'invention est l'installation des galeries en partie haute du véhicule, à proximité des pieds et des traverses de pied, de sorte que les galeries en position de non-usage, c'est-à-dire relevées à l'horizontal, occupent l'espace entre les traverses de pied qui est un espace non utilisé habituellement. La structure de galerie en non-usage occupe ainsi un volume mort du véhicule, et ne crée pas un encombrement supplémentaire. De plus les pieds et traverses de pieds qui renforcent la structure de caisse peuvent être dimensionnés selon l'usage du véhicule et du poids des charges que le véhicule est autorisé à transporter.

De plus, selon un cas non illustré, il est possible de fractionner les galeries, c'est-à-dire d'avoir deux galeries aboutées l'une à l'autre suivant la même direction, soit la direction transversale du véhicule, supportées par un support central auquel se fixent les côtés desdites deux galeries aboutées pour dissocier le déploiement des galeries côté droit du véhicule de celles du côté gauche. De préférence ledit support central est commun aux dites deux galeries, ledit support intégrant un axe de pivot permettant de déplacer par pivotement lesdites deux galeries aboutées. Ledit support central des galeries se fixe de préférence sur la structure de caisse, dans une zone sensiblement centré sur les traverses de pied. Les galeries sont par ailleurs de leur autre côté solidarisées à une paroi latérale du véhicule, par exemple selon les modes décrits précédemment.

En figure 5 est illustré un exemple d'élément avant support de charges 3 dudit ensemble intérieur support de charge, qui est aménagé en prolongement des galeries qui viennent d'être décrites, cet aménagement se faisant notamment dans la partie habitacle au-dessus d'un ou des passagers. Cet élément avant 3 support de charges est une boite qui permet de transporter, et si besoin de stocker, des objets au-dessus de la tête du passager et/ou du conducteur. Cette boîte peut être préformée en plastique, par exemple en polypropylène. Cet élément en forme de boîte comporte une paroi inférieure 30 qui est de préférence horizontale et se prolonge en une paroi supérieure 31 qui épouse sensiblement la forme intérieure du pavillon.

En avant de cet élément en forme de boite se trouve un ensemble de pions d'indexage 61 qui participent au centrage (indexage) de la boite sur la traverse pavillon TP. A l'arrière de la paroi inférieure 30, se trouve un insert métallique 60 permettant de rigidifier ledit élément. Cet insert permet aussi de fixer la cloison W entre l'habitacle et la partie utilitaire du véhicule, ladite cloison étant moins haute que pour un véhicule non équipé de l'ensemble de rangement. A l'arrière de la paroi supérieure 31, se trouve une zone plane 62 qui permet de fixer ledit élément sur la traverse de pied TB. Ainsi l'isostatisme est assuré. On peut prévoir alternativement ou en complément des pions d'indexage, une traverse intermédiaire pour supporter le poids de l'élément et les objets stockés, la traverse étant reprise de part et d'autre du véhicule.

Cet élément en forme de boîte prolonge ainsi avantageusement les galeries pour le transport et le stockage d'objets.

## Revendications

1. Ensemble intérieur support de charges, se disposant en partie intérieure haute d'un véhicule comprenant au moins une première et une deuxième galeries (1, 2) supports de charges, munies d'un dispositif de solidarisation à l'intérieur du véhicule, et montées pour être déplacées par pivotement, réversiblement, d'une position d'usage à une position de non-usage, lesdites galeries étant solidarisées entre elles par des moyens de couplage (50) de sorte que le déplacement d'une des galeries entraîne le déplacement de l'autre galerie lors du passage réversible d'une position d'usage à une position de non-usage, **caractérisé en ce que** les moyens de couplage (50) entre lesdites galeries comprennent une première tringle (510) et une deuxième tringle (520) articulées entre elles en l'une de leur extrémité respective, ladite première tringle étant articulée en son autre extrémité avec ladite première galerie et ladite deuxième tringle étant reliée en son autre extrémité de manière fixe avec ladite deuxième galerie..

2. Ensemble selon la revendication 1, **caractérisé en ce que** ladite première galerie (1) comprend un dispositif de verrouillage de ses positions d'usage et de non usage.

3. Ensemble selon la revendication 1, **caractérisé en ce que** la première tringle (510) est d'une longueur supérieure à la deuxième tringle (520).

4. Ensemble selon l'une des revendications 1 à 3, **caractérisée en ce qu'**au moins l'un des dispositifs de solidarisation de ladite première galerie à l'intérieur du véhicule intègre lesdits moyens de verrouillage des positions d'usage et de non-usage.

5. Ensemble selon la revendication 4, **caractérisé en ce que** ladite première galerie (1) comprend une barre transversale prolongée en chacune de ses extrémités d'un bras latéral (12) équipé d'un bouton poussoir (43), et lesdits moyens de solidarisation comprennent un dispositif de guidage et de verrouillage (41) en forme de secteur présentant une rainure de guidage (410) de la tête du poussoir (43), ladite rainure étant en forme d'un arc de cercle qui présente en chaque extrémité un logement en creux récepteur de la tête du poussoir et correspondant respectivement à la position d'usage et de non-usage de la galerie.

6. Ensemble selon l'une des revendications 1 à 5, **caractérisé en ce que** lesdites galeries sont montées pivotables pour être déplacées par pivotement, réversiblement, d'une position d'usage à une position de non-usage suivant un déplacement angulaire de 90 degrés.

7. Ensemble selon l'une des revendications 1 à 6, **caractérisé en ce qu'**il comprend un élément de rangement (3) en prolongement des galeries (1, 2), se présentant sous forme d'une boîte comportant une paroi inférieure (30) sensiblement horizontale et se prolonge en une paroi supérieure (31) qui épouse sensiblement la forme intérieure du pavillon (T) du véhicule.

8. Véhicule utilitaire, **caractérisé en ce qu'**il comprend dans sa partie intérieure haute, un ensemble intérieur support de charges défini à l'une des revendications 1 à 7, les galeries (1,2) dudit ensemble étant installées en partie utilitaire du véhicule, à proximité des pieds (C, D) et traverses de pieds du véhicule (TC, TD).

9. Véhicule utilitaire selon la revendication 8, **caractérisé en ce que** la première galerie (1) desdites galeries est la galerie située le plus à l'arrière du véhicule.

10. Véhicule utilitaire selon l'une des revendications 8 ou 9, **caractérisé en ce que** l'élément de rangement (3) dudit ensemble est aménagé en prolongement des galeries (1, 2), dans la partie haute de l'habitacle.

11. Véhicule utilitaire selon la revendication 10, **caractérisé en ce que** ledit élément de rangement est fixé entre deux traverses de pieds du véhicule (TP, TB).

## Patentansprüche

1. Innenraumanordnung zum Tragen von Lasten, die im oberen Innenraumteil eines Fahrzeugs angeordnet ist und wenigstens einen ersten und einen zweiten Träger (1, 2) zum Tragen von Lasten umfasst, die mit einer Vorrichtung zur festen Verbindung mit dem Innenraum des Fahrzeugs ausgestattet sind und so angebracht sind, dass sie durch Schwenken aus einer Verwendungsposition in eine Nicht-Verwendungsposition und umgekehrt verlagert werden können, wobei die Träger durch Kopplungsmittel (50) fest miteinander verbunden sind, derart, dass die Verlagerung eines der Träger beim umkehrbaren Übergang aus einer Verwendungsposition in eine Nicht-Verwendungsposition die Verlagerung des anderen Trägers zur Folge hat, **dadurch gekennzeichnet, dass** die Mittel zur Kopplung (50) zwischen den Trägern eine erste Stange (510) und eine zweite Stange (520) umfassen, die jeweils an ihrem einen Ende miteinander gelenkig verbunden sind, wobei die erste Stange an ihrem anderen Ende mit dem ersten Träger gelenkig verbunden ist und die zweite Stange an ihrem anderen Ende starr mit dem zweiten Träger verbunden ist.

2. Anordnung nach Anspruch 1, **dadurch gekennzeichnet, dass** der erste Träger (1) eine Vorrichtung zur Verriegelung seiner Verwendungs- und seiner Nicht-Verwendungsposition umfasst.

3. Anordnung nach Anspruch 1, **dadurch gekennzeichnet, dass** die erste Stange (510) eine größere Länge als die zweite Stange (520) aufweist.

4. Anordnung nach einem der Ansprüche 1 bis 3, **dadurch gekennzeichnet, dass** in wenigstens eine der Vorrichtungen zur festen Verbindung des ersten Trägers mit dem Innenraum des Fahrzeugs die Mittel zur Verriegelung der Verwendungs- und der Nicht-Verwendungsposition integriert sind.

5. Anordnung nach Anspruch 4, **dadurch gekennzeichnet, dass** der erste Träger (1) eine Querstange umfasst, die an jedem ihrer Enden durch einen seitlichen Arm (12) verlängert ist, der mit einer Drucktaste (43) ausgestattet ist, und die Mittel zur festen Verbindung eine Führungs- und Verriegelungsvorrichtung (41) von der Form eines Sektors umfassen, der eine Nut zur Führung (410) des Kopfes der Taste (43) aufweist, wobei die Nut die Form eines Kreisbogens hat, welcher an jedem Ende eine vertiefte Aufnahme aufweist, die den Kopf der Taste aufnimmt und der Verwendungs- bzw. der Nicht-Verwendungsposition des Trägers entspricht.

6. Anordnung nach einem der Ansprüche 1 bis 5, **dadurch gekennzeichnet, dass** die Träger schwenkbar angebracht sind, um durch Schwenkung mittels einer Winkelverschiebung um 90 Grad umkehrbar aus einer Verwendungsposition in eine Nicht-Verwendungsposition verlagert zu werden.

7. Anordnung nach einem der Ansprüche 1 bis 6, **dadurch gekennzeichnet, dass** sie in Verlängerung der Träger (1, 2) ein Ablageelement (3) umfasst, dass die Form eines Kastens aufweist, der eine untere Wand (30) aufweist, die im Wesentlichen horizontal ist und sich in einer oberen Wand (31) fortsetzt, welche im Wesentlichen an die innere Form des Daches (T) des Fahrzeugs angepasst ist.

8. Nutzfahrzeug, **dadurch gekennzeichnet, dass** es in seinem oberen Innenraumteil eine Innenraumanordnung zum Tragen von Lasten, wie in einem der Ansprüche 1 bis 7 definiert, umfasst, wobei die Träger (1, 2) der Anordnung im Nutzlastteil des Fahrzeugs eingebaut sind, in der Nähe der Stützen (C, D) und Querstreben (TC, TD) der Stützen des Fahrzeugs.

9. Nutzfahrzeug nach Anspruch 8, **dadurch gekennzeichnet, dass** der erste Träger (1) von den Trägern derjenige Träger ist, der sich im Fahrzeug am weitesten hinten befindet.

10. Nutzfahrzeug nach einem der Ansprüche 8 oder 9, **dadurch gekennzeichnet, dass** das Ablageelement (3) der Anordnung in der Verlängerung der Träger (1, 2) im oberen Teil des Fahrzeuginnenraums angeordnet ist.

11. Nutzfahrzeug nach Anspruch 10, **dadurch gekennzeichnet, dass** das Ablageelement zwischen zwei Querstreben von Stützen des Fahrzeugs (TP, TB) befestigt ist.

## Claims

1. Interior load support assembly arranged in the upper interior part of a vehicle, comprising at least a first and a second load support gallery (1, 2), these being provided with a device for securing inside the vehicle and mounted so as to be reversibly moved by pivoting from a position of use to a position of non-use, said galleries being secured to one another by coupling means (50) such that the movement of one of the galleries causes the other gallery to move when reversibly passing from a position of use to a position of non-use, **characterized in that** the coupling means (50) between said galleries comprise a first link rod (510) and a second link rod (520) that are articulated to one another at one of their respective ends, said first link rod being articulated at its other end to said first gallery and said second link rod being connected at its other end in a fixed manner to said second gallery.

2. Assembly according to Claim 1, **characterized in that** said first gallery (1) comprises a device for locking its positions of use and of non-use.

3. Assembly according to Claim 1, **characterized in that** the first link rod (510) is longer than the second link rod (520).

4. Assembly according to one of Claims 1 to 3, **characterized in that** said means for locking the positions of use and of non-use are integrated into at least one of the devices for securing said first gallery to the interior of the vehicle.

5. Assembly according to Claim 4, **characterized in that** said first gallery (1) comprises a transverse bar extended at each of its ends by a lateral arm (12) equipped with a pushbutton (43), and said securing means comprise a guiding and locking device (41) in the form of a sector having a slot (410) for guiding the head of the pushbutton (43), said slot being in the form of an arc of a circle which has, at each end, a hollow recess for receiving the head of the pushbutton and corresponding respectively to the position of use and of non-use of the gallery.

6. Assembly according to one of Claims 1 to 5, **characterized in that** said galleries are mounted so as to be able to be pivoted in order to be reversibly moved by pivoting from a position of use to a position of non-use through an angular displacement of 90 degrees.

7. Assembly according to one of Claims 1 to 6, **characterized in that** it comprises a storage element (3) in the extension of the galleries (1, 2), taking the form of a box comprising an essentially horizontal lower wall (30) and extending into an upper wall (31) which essentially matches the internal shape of the roof (T) of the vehicle.

8. Utility vehicle, **characterized in that** it comprises, in its upper interior part, an interior load support assembly defined in one of Claims 1 to 7, the galleries (1, 2) of said assembly being installed in the utility portion of the vehicle, close to the pillars (C, D) and pillar crossmembers (TC, TD) of the vehicle.

9. Utility vehicle according to Claim 8, **characterized in that** the first gallery (1) of said galleries is the gallery located furthest to the rear of the vehicle.

10. Utility vehicle according to either of Claims 8 and 9, **characterized in that** the storage element (3) of said assembly is arranged in the extension of the galleries (1, 2), in the upper portion of the passenger compartment.

11. Utility vehicle according to Claim 10, **characterized in that** said storage element is secured between two pillar crossmembers (TP, TB) of the vehicle.
